# FASCICULE DE BREVET EUROPEEN

(11) **EP 0 643 256 B1**
(45) Date de publication et mention de la délivrance du brevet: **29.12.1999**
(21) Numéro de dépôt: 94402038.7
(22) Date de dépôt: 13.09.1994
(51) Int. Cl.: F21M 7/00, F21Q 1/00

(54) **Boîtier et capuchon pour dispositif d'éclairage ou de signalisation de véhicule automobile**
Gehäuse und Abdeckkappe für Kraftfahrzeugscheinwerfer oder -Signallampe
Housing and cap for headlamp or signal lamp of a vehicle

(30) Priorité: 15.09.1993 FR 9310980
(43) Date de publication de la demande: 15.03.1995
(73) Titulaire: VALEO VISION, 93000 Bobigny (FR)
(72) Inventeur: Gency, Claude, F-93500 Pantin (FR); Fhal, Laurent, F-75011 Paris (FR)
(74) Mandataire: Martin, Jean-Jacques

(56) Documents cités:
- DE-B- 1 266 154
- DE-B- 1 288 533

## Description

La présente invention concerne notamment un boîtier pour un dispositif d'éclairage ou de signalisation de véhicule automobile.

Il s'agit d'un boîtier du genre fermé à l'avant par une glace, qui abrite au moins une lampe et un réflecteur. Sa paroi affecte, au niveau d'une ouverture d'accès, une forme sensiblement cylindrique et il porte un capuchon d'obturation de cette ouverture.

De nombreuses variantes de ce boîtier ont été proposées. Généralement, l'ouverture précitée se situe à l'arrière du boîtier. Elle permet notamment d'avoir facilement accès à l'intérieur du boîtier, par exemple pour procéder au changement de la lampe.

Les capuchons sont réalisés en matériau élastomère et ils comportent très souvent des lèvres, joints et/ou parois disposés en labyrinthe, tous ces moyens étant destinés à améliorer l'étanchéité du boîtier.

En particulier, les exigences contenues dans les cahiers des charges sont telles qu'on demande maintenant aux boîtiers de présenter une parfaite étanchéité à des pressions d'eau supérieures à 4 x 10⁵ Pa.

Les boîtiers connus ne satisfont pas ces exigences. De plus, utilisant des moyens de verrouillage, les capuchons qu'ils reçoivent ne sont pas faciles à monter/démonter.

Lorsque l'homme du métier cherche à parfaire les performances d'un capuchon en matière d'étanchéité, son réflexe est de choisir un matériau présentant une bonne élasticité, tel qu'un matériau élastomère, et de multiplier les lèvres, labyrinthes, etc., jusqu'à obtenir le degré d'étanchéité requis.

C'est ainsi que le document DE-B-1 266 154 décrit un boîtier équipé d'un capuchon en caoutchouc ou analogue, conformément au préambule de la revendication 1.

Ce boîtier connu présente toutefois un certain nombre d'inconvénients:
- tout d'abord, la souplesse inhérente du caoutchouc, ainsi que la présence de bords vifs au niveau de la gorge du capuchon et surtout de l'aménagement du boîtier qu'elle doit recevoir, risquent de provoquer un emboîtement imparfait entre cette gorge et cet aménagement;
- en outre, cette même souplesse fait que la force de rappel élastique de la jupe du capuchon vers l'extérieur risque d'être insuffisante pour assurer une bonne étanchéité lorsque des écarts de pression importants sont présents.

Malgré ces défatits, les matériaux du genre élastomère sont toujours préférés à l'heure actuelle pour réaliser des capuchons étanches, car ce sont eux qui offrent, de par leur déformabilité et surtout leur compressibilité, les surfaces de contact les plus importantes.

Bien à l'encontre de cette attitude, la demanderesse a découvert qu'il était possible d'obtenir des qualités d'étanchéité extrêmement satisfaisantes en utilisant une matière moins déformable que les matières élastomères et une géométrie des éléments adaptée.

Ainsi, la présente invention se fixe pour but de proposer un nouveau type de boîtier comme indiqué ci-dessus, qui reste étanche à des fortes pressions d'eau (au moins supérieures à 4 x 10⁵ Pa) et dont en outre le montage/démontage du capuchon soit extrêmement simple.

Ce but est atteint, conformément à l'invention, par les caractéristiques de la revendication 1 et de la revendication 7.

Grâce à ces caractéristiques, le montage et le démontage du capuchon sont facilités puisqu'ils exigent simplement la mise en oeuvre d'un effort axial. Aucun verrouillage par un mouvement rotatif n'est requis.

De plus, une parfaite étanchéité est obtenue, sans avoir recours à la présence d'un joint séparé.

Par le terme "semi-rigide", on entend un matériau qui, tout en se laissant déformer suite à des efforts qu'il subit, retrouve instantanément sa forme initiale dès lors que les efforts ont cessé. Cette définition est valable pour l'ensemble de la présente description, y compris les revendications. Le polypropylène est un matériau bien représentatif de cette définition.

D'autres caractéristiques avantageuses, mais non limitatives, sont exprimées dans les revendications dépendantes.

D'autres caractéristiques et avantages de l'invention apparaîtront de la description et des dessins annexés qui en présentent des modes de réalisation préférentiels.

Sur ces dessins :
- la figure 1 est une vue de côté, en coupe verticale d'un boîtier de projecteur pour véhicule automobile et d'un premier mode de réalisation de son capuchon ;
- la figure 2 est également une vue de côté, en coupe verticale, du capuchon de la figure 1 ;
- les figures 3 et sont des vues partielles en coupe, du boîtier et du capuchon destinées à montrer leur assemblage respectif ;
- la figure 5 est une vue de face, en coupe verticale d'un second mode de réalisation du capuchon et d'une partie du boîtier, avant assemblage ;
- la figure 6 est une vue similaire à la figure 5, les deux éléments étant assemblés ;
- la figure 7 est une vue en coupe verticale d'un troisième mode de réalisation du capuchon.

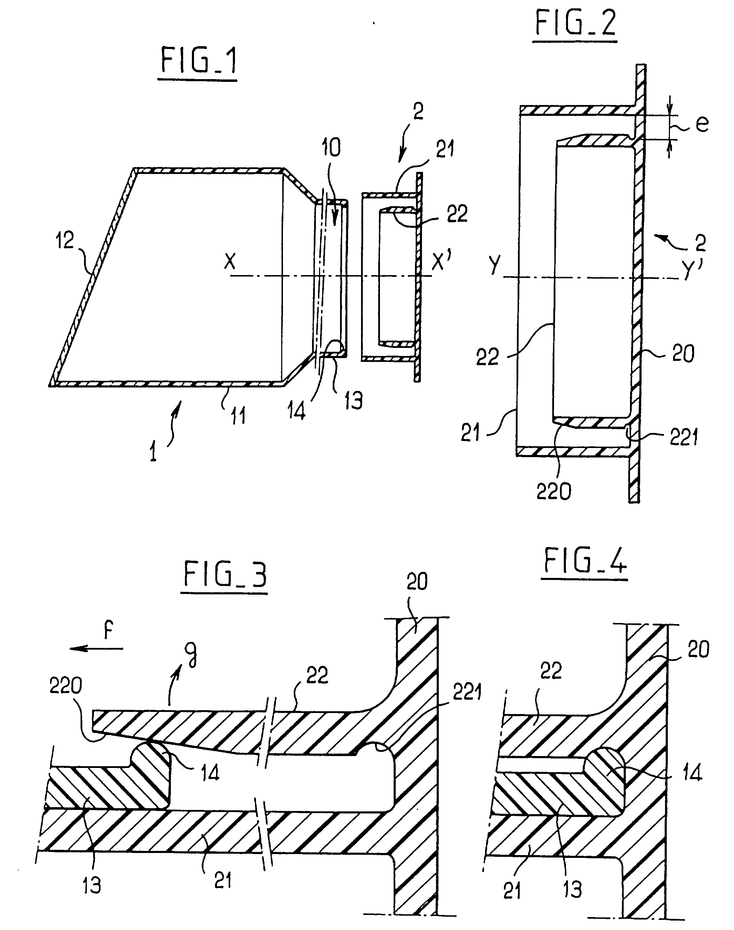

Le boîtier représenté à la figure 1 est formé d'un corps 11 en matière plastique rigide. De manière bien connue, son ouverture située à l'avant, c'est-à-dire sur la partie gauche de la figure, est fermée par une glace transparente 12. Ce boîtier abrite au moins une lampe et un réflecteur non représentés. A sa partie arrière, il présente une ouverture d'accès 10 à contour circulaire dont le centre passe par l'axe optique XX' du boîtier.

Au niveau de cette ouverture, la paroi 13 du boîtier affecte une forme sensiblement cylindrique.

Cette paroi débouche sur l'ouverture par une nervure périphérique 14 tournée vers l'axe XX'. On expliquera plus loin la fonction de cette nervure. Dans une variante de réalisation, la nervure est discontinue de sorte qu'elle est formée de plusieurs tronçons distincts qui s'étendent chacun selon un secteur angulaire déterminé.

Le boîtier de l'invention comporte également un capuchon 2 représenté aux figures 1 et 2. Ce capuchon est formé par moulage d'une matière plastique semi-rigide telle que par exemple du polypropylène.

Il comporte une paroi de fond 20 de forme circulaire à laquelle se raccordent, du même côté, deux jupes annulaires axiales 21 et 22, ce qui signifie qu'elles ont la forme de cylindres concentriques dont l'axe est confondu avec celui YY' du capuchon.

La jupe 21, de plus grand diamètre, présente une épaisseur constante. Son diamètre intérieur est plus grand que le diamètre extérieur de la paroi 13 du boîtier 1.

La jupe 22 a un diamètre et une hauteur plus petits que ceux de la jupe 21. Sa face externe présente un chanfrein d'entrée 220 et, à sa base, c'est-à-dire dans la zone de raccordement avec le fond 20, une rainure périphérique 221.

La surface externe de la jupe 22 présente, entre le chanfrein 220 et la rainure périphérique 221, une forme en tonneau.

La distance qui sépare la paroi interne de la jupe 21 du fond de la rainure périphérique 221 est désignée e et est légèrement supérieure à l'épaisseur de la paroi 13 du boîtier, au niveau de la nervure 14.

L'engagement du capuchon sur le boîtier s'effectue de la manière suivante.

On présente le capuchon 2 au niveau de l'ouverture 10 du boîtier de telle sorte que ses jupes soient tournées vers ce dernier.

On engage alors les jupes 21 et 22 de part et d'autre de la paroi 13 du boîtier selon un mouvement dirigé axialement (flèche f, figure 3).

Cet engagement est facilité par la présence du chanfrein 220 au niveau de la jupe 22.

Au cours de cette manoeuvre, la jupe 22 coulisse le long de la face intérieure de la paroi 13 du boîtier, tandis que la nervure 14 prend appui sur le chanfrein 220 et opère un arcboutement de la jupe 22 dans le sens de la flèche g. Lorsque le chant de la paroi 13 rencontre le fond 20 du capuchon 2, la nervure 14 s'engage dans la rainure 221 du capuchon. La jupe 22 reprend alors sa position initiale. Il s'opère ainsi une sorte de cloquage, c'est-à-dire un engagement élastique de la nervure dans la rainure, et un contact entre la paroi interne 13 et la paroi externe 22, lequel assure l'étanchéité de la fermeture.

De manière inattendue, on obtient, conformément à l'invention, un boîtier qui présente une résistance et une étanchéité à une pression d'eau supérieure à 4 x 10⁵ Pa.

Il est bien entendu possible de retirer le capuchon 2, si on le souhaite, en effectuant une traction axiale sur celui-ci.

Dans une autre forme de réalisation, la nervure 14 pourrait être prévue sur la face extérieure de la paroi 13. Par conséquent, la rainure 221 serait prévue non pas sur la jupe 22 mais sur la jupe 21, au niveau de sa paroi interne.

Dans encore un autre mode de réalisation, la jupe 21 est absente.

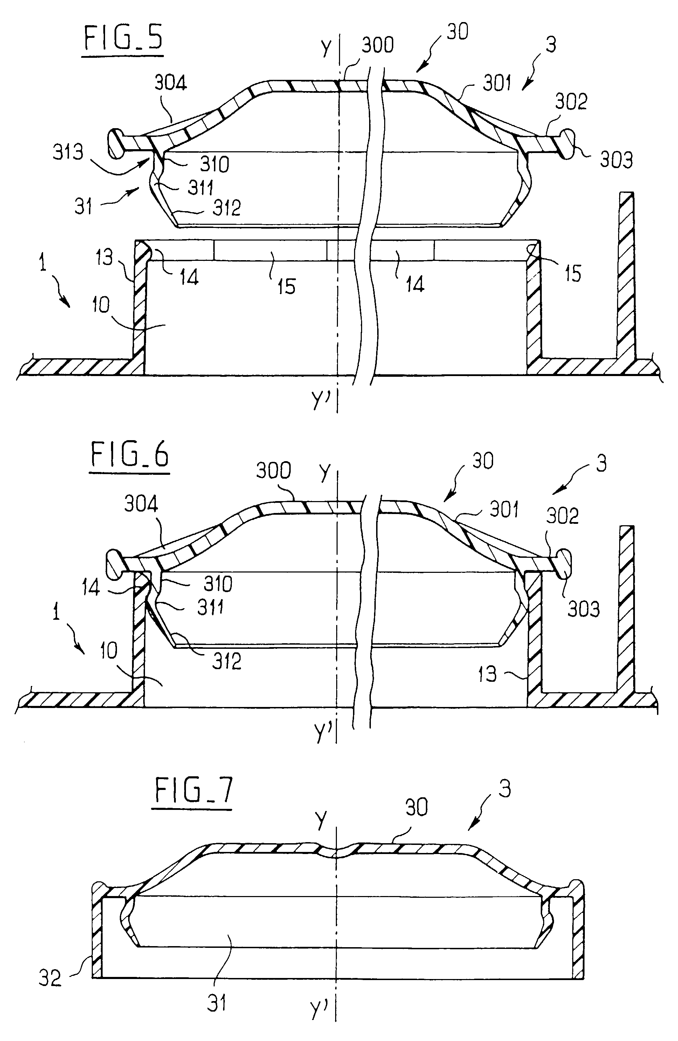

Aux figures 5 et 6, un autre mode de réalisation conforme à l'invention est représenté. Le capuchon 3 est formé par moulage d'une matière plastique semi-rigide, telle que du polypropylène.

Sa paroi de fond circulaire 30 a la forme générale d'une assiette renversée avec des parties centrale et extérieure 300, 302 planes, et séparées par une zone de transition galbée 301.

La périphérie de ce fond est pourvue d'un bourrelet 303. Sur la face externe de la paroi de fond 30 sont prévues, sensiblement dans la région de raccordement de la partie centrale 300 et de la zone 301, des nervures 304. Elles sont par exemple au nombre de huit et réparties régulièrement sur la surface du capuchon. Leur rôle est de donner au capuchon une certaine rigidité, tout en conservant entre les nervures 304 la souplesse nécessaire au montage dont les caractéristiques vont être exposées ci-après.

Du côté opposé de la paroi de fond 30 s'étend axialement une jupe circulaire 31 qui prend naissance en regard des nervures 304, c'est-à-dire là où la partie 300 et la zone 301 se raccordent.

La jupe 31 comporte, à partir de sa base, une zone dite "de fixation" 310 qui s'étend axialement, une zone dite "d'étanchéité" 311 qui consiste en un renflement périphérique dirigé vers l'extérieur et enfin, une zone terminale de section tronconique 312, dont la conicité est dirigée vers le centre du capuchon, dans le prolongement du renflement de la zone 311.

La partie 302 de la paroi de fond délimite, avec les zones 310 et 311 précitées, une gorge périphérique 313 tournée vers l'extérieur.

L'ouverture 10 du boîtier est délimitée par une paroi 13 de forme cylindrique. La paroi est pourvue à ce niveau d'une nervure 14 formée de plusieurs tronçons discontinus, séparés par des secteurs 15 à bord biseauté. Le nombre de tronçons nervurés est par exemple de trois, angulairement équidistants deux à deux.

On notera que le diamètre extérieur de la jupe 31, au niveau de la zone 311 est supérieur au diamètre intérieur de l'ouverture 10, mesuré entre deux tronçons 14.

L'engagement du capuchon 3 sur le boîtier s'effectue alors de la manière suivante.

On amène le capuchon au niveau de l'ouverture et l'on introduit la jupe 31 dans l'ouverture. Cette manoeuvre est facilitée par la section conique de la zone 312.

La zone 311 vient alors en appui contre les tronçons de nervure 14 qui constituent des points durs. Une fois franchis, ces tronçons se logent dans la gorge ou rainure 313 en réalisant l'encliquetage et la fermeture du capuchon. Ceci se traduit par un bruit caractéristique, témoin d'une fermeture correcte.

On notera que la forme particulière tronconique de la zone 312 permet de n'autoriser le maintien du capuchon sur le boîtier qu'en position de fermeture et d'encliquetage complets, toute fermeture et encliquetage imparfaits entraînant une expulsion du capuchon.

La forme particulière du cône 311 et du renflement 312 permet de leur conférer une certaine élasticité et d'assurer ainsi pleinement leurs fonctions d'étanchéité et de fermeture "tout ou rien" qui leur sont dévolues.

Dans la forme de réalisation de la figure 7, le capuchon 3, qui présente la même forme générale que le capuchon déjà décrit, comprend, en plus de la jupe 31 une seconde jupe 32 de diamètre et de hauteur supérieurs. Elle se raccorde au fond 30 au niveau de sa périphérie. Cette jupe est destinée à entourer la paroi de l'ouverture du boîtier sur lequel doit être montée le capuchon, de sorte qu'elle constitue une chicane formant barrière à l'eau.

## Revendications

1. Boîtier pour un dispositif d'éclairage ou de signalisation de véhicule automobile, du type fermé par une glace et abritant au moins une lampe et un réflecteur, dont la paroi (13) affecte, au niveau d'une ouverture (10) d'accès, une forme sensiblement cylindrique, et qui porte un capuchon (2) d'obturation de cette ouverture (10), ledit capuchon comportant au moins une jupe annulaire (21, 22; 31, 32) dirigée axialement, apte à venir se positionner contre ladite paroi (13) selon une surface de contact périphérique dirigée axialement, et la jupe (21, 22; 31, 32) présentant, sur toute son étendue circonférentielle, au moins une gorge latérale (221; 313), tandis que la paroi (13) comporte au moins un aménagement (14) de forme complémentaire, caractérisé en ce que le capuchon (2) est formé d'une matière plastique semi-rigide, et en ce que l'aménagement (14) de la paroi (13) consiste en un bossage s'étendant en saillie radialement à partir de la paroi.

2. Boîtier selon la revendication 1, caractérisé en ce que ladite gorge a la forme d'une rainure (221 ; 313), tandis que le bossage consiste en une nervure périphérique discontinue ou non (14), la rainure et le bossage ayant chacun un profil arrondi.

3. Boîtier selon la revendication 1 ou 2 qui comprend une jupe interne (22) et une jupe externe (21), caractérisé en ce que ladite gorge (221) est formée dans la jupe interne (22).

4. Boîtier selon la revendication 1 ou 2 qui comprend une jupe interne (22) et une jupe externe (21), caractérisé en ce que la gorge (221) est formée dans la jupe externe (21).

5. Boîtier selon l'une des revendications 3 ou 4, caractérisé en ce que la paroi extérieure de la jupe interne (22) est chanfreinée.

6. Boîtier selon l'une des revendications 1 ou 2, caractérisé en ce que la gorge (313) est bordée par une zone dite d'étanchéité (311) qui consiste en un renflement périphérique formant point dur lors de l'introduction du capuchon sur le boîtier, et qui se prolonge par une zone terminale de section tronconique (312) apte à réaliser une fermeture "tout ou rien".

7. Capuchon d'obturation apte à être monté sur l'ouverture (10) d'accès d'un boîtier, délimitée par une paroi (13) prédéterminée dirigée sensiblement axialement et possédant au voisinage de son extrémité libre un bossage latéral prédéterminé (14), d'un dispositif d'éclairage ou de signalisation de véhicule automobile, le capuchon étant du type comportant au moins une jupe annulaire (21, 22; 31, 32) s'étendant sensiblement axialement à partir d'une paroi de fond (20 ; 300) et apte à venir se positionner de façon sensiblement complémentaire contre ladite paroi (13) du boîtier, et étant caractérisé en ce qu'il est formé d'une matière plastique semi-rigide et en ce que ladite jupe (21, 22 ; 31, 32) présente, de façon adjacente à ladite paroi de fond et sur toute son étendue circonférentielle, au moins une gorge latérale (221; 313) apte à recevoir ledit bossage, ladite gorge s'ouvrant radialement sur l'extérieur en étant délimitée, du côté de ladite paroi de fond, directement par un prolongement de cette paroi de fond vers l'extérieur.

8. Capuchon selon la revendication 7, caractérisé en ce que la gorge (313) est bordée par une zone dite d'étanchéité (311) qui consiste en un renflement périphérique formant point dur lors de l'introduction du capuchon sur le boîtier, et qui se prolonge par une zone terminale de section tronconique (312) apte à réaliser une fermeture "tout ou rien".

9. Projecteur de véhicule automobile équipé d'un boîtier conforme à l'une des revendications 1 à 6.

## Patentansprüche

1. Gehäuse für eine Beleuchtungs- oder Signalvorrichtung eines Kraftfahrzeugs, das durch eine Abdeckscheibe verschlossen ist und wenigstens eine Lampe und einen Reflektor enthält, dessen Wand (13), in Höhe einer Zugangsöffnung (10), eine in etwa zylindrische Form aufweist und das eine Abdeckkappe (2) zum Verschluß dieser Öffnung (10) trägt, wobei die besagte Abdeckkappe wenigstens eine axial gerichtete ringförmige Einfassung (21, 22; 31, 32) umfaßt, die sich an der besagten Wand (13) entlang einer axial gerichteten Umfangskontaktfläche positionieren kann, und wobei die Einfassung (21, 22; 31, 32) auf ihrer gesamten Umfangsausdehnung wenigstens eine seitliche Auskehlung (221; 313) aufweist, während die Wand (13) wenigstens eine formschlüssige Anordnung (14) umfaßt, **dadurch gekennzeichnet**, daß die Abdeckkappe (2) aus einem halbstarren Kunststoff ausgebildet ist und daß die Anordnung (14) der Wand (13) aus einem Vorsprung besteht, der sich radial von der Wand aus vorstehend erstreckt.

2. Gehäuse nach Anspruch 1, **dadurch gekennzeichnet**, daß die besagte Auskehlung die Form einer Nut (221; 313) hat, während der Vorsprung aus einer unterbrochenen oder nicht unterbrochenen Umfangsrippe (14) besteht, wobei die Nut und der Vorsprung jeweils ein abgerundetes Profil aufweisen.

3. Gehäuse nach Anspruch 1 oder 2, das eine innere Einfassung (22) und eine äußere Einfassung (21) umfaßt, **dadurch gekennzeichnet**, daß die besagte Auskehlung (221) in der inneren Einfassung (22) ausgebildet ist.

4. Gehäuse nach Anspruch 1 oder 2, das eine innere Einfassung (22) und eine äußere Einfassung (21) umfaßt, **dadurch gekennzeichnet**, daß die Auskehlung (221) in der äußeren Einfassung (21) ausgebildet ist.

5. Gehäuse nach einem der Ansprüche 3 oder 4, **dadurch gekennzeichnet**, daß die Außenwand der inneren Einfassung (22) abgeschrägt ist.

6. Gehäuse nach einem der Ansprüche 1 oder 2, **dadurch gekennzeichnet**, daß die Auskehlung (313) durch einen sogenannten Abdichtungsbereich (311) eingefaßt ist, der aus einer Umfangsausbauchung besteht, die als Festpunkt beim Einsetzen der Abdeckkappe am Gehäuse dient, und der durch einen Endbereich mit kegelstumpfartigem Querschnitt (312) verlängert wird, der einen "Auf-Zu"-Verschluß ausführen kann.

7. Abdeckkappe, die an der Zugangsöffnung (10) eines Gehäuses angebracht werden kann, die durch eine in etwa axial gerichtete vorbestimmte Wand (13) begrenzt ist, die in der Nähe ihres freien Endes einen vorbestimmten seitlichen Vorsprung (14) umfaßt, einer Beleuchtungs- oder Signalvorrichtung eines Kraftfahrzeugs, wobei die Abdeckkappe wenigstens eine ringförmige Einfassung (21, 22; 31, 32) umfaßt, die sich in etwa axial von einer Bodenwand (20; 300) aus erstreckt und die sich in etwa formschlüssig an der besagten Wand (13) des Gehäuses positionieren kann, **dadurch gekennzeichnet**, daß sie aus einem halbstarren Kunststoff ausgebildet ist und daß die besagte Einfassung (21, 22; 31, 32), an der besagten Bodenwand angrenzend und auf ihrer gesamten Umfangsausdehnung, wenigstens eine seitliche Auskehlung (221; 313) aufweist, die den besagten Vorsprung aufnehmen kann, wobei sich die besagte Auskehlung radial nach außen öffnet, während sie, auf der Seite der besagten Bodenwand, direkt durch eine Verlängerung dieser Bodenwand nach außen verschlossen ist.

8. Abdeckkappe nach Anspruch 7, **dadurch gekennzeichnet**, daß die Auskehlung (313) durch einen sogenannten Abdichtungsbereich (311) eingefaßt ist, der aus einer Umfangsausbauchung besteht, die als Festpunkt beim Einsetzen der Abdeckkappe am Gehäuse dient, und der durch einen Endbereich mit kegelstumpfartigem Querschnitt (312) verlängert wird, der einen "Auf-Zu"-Verschluß ausführen kann.

9. Kraftfahrzeugscheinwerfer, der mit einem Gehäuse gemäß einem der Ansprüche 1 bis 6 ausgerüstet ist.

## Claims

1. A casing for a motor vehicle lighting or indicator unit, of the type closed by a cover glass and containing within it at least one lamp and a reflector and having a wall (13), which has a substantially cylindrical form in the region of an access aperture (10) and which carries a cap (2) for covering the said aperture (10), the said cap having at least one annular skirt portion (21, 22; 31, 32) directed axially, adapted to adopt a position against the said wall (13) by virtue of an axially directed peripheral contact surface, and the skirt portion (21, 22; 31, 32) having, over its whole circumferential extent, at least one lateral recess (221; 313), while the wall (13) includes at least one element (14) of complementary form, characterised in that the cap (2) is made of a semi-rigid plastics material, and in that the element (14) of the wall (13) consists of a bead projecting radially from the wall.

2. A casing according to Claim 1, characterised in that the said recess is in the form of a groove (221; 313), while the bead consists of a peripheral rib (14), discontinuous or otherwise, the groove and the bead each having a rounded profile.

3. A casing according to Claim 1 or Claim 2, which has an inner skirt portion (22) and an outer skirt portion (21), characterised in that the said recess (221) is defined within the inner skirt portion (22).

4. A casing according to Claim 1 or Claim 2 which includes an inner skirt portion (22) and an outer skirt portion (21), characterised in that the recess (221) is defined within the outer skirt portion (21).

5. A casing according to Claim 3 or Claim 4, characterised in that the outer wall of the inner skirt portion (22) is chamfered.

6. A casing according to Claim 1 or Claim 2, characterised in that the recess (313) is bounded by a so-called sealing zone (311) which consists of a peripheral protrusion constituting a hard point during introduction of the cap on the casing, and which is extended by a terminal zone (312) of frusto-conical cross section which is adapted to obtain "all or nothing" closing.

7. In a motor vehicle lighting or indicator unit, a closure cap adapted to be mounted on the access aperture (10) of a casing bounded by a predetermined wall (13), which extends substantially axially and has a predetermined lateral bead (14) in the region of its free end, the cap being of the type which includes at least one annular skirt portion (21, 22; 31, 32) extending substantially axially from a base wall (20; 300) and adapted to come into position in a substantially complementary manner against the said wall (13) of the casing, and being characterised in that it is formed of a semi-rigid plastics material and in that the said skirt portion (21, 22; 31, 32) has, adjacent to the said base wall and over its circumferential extent, at least one lateral recess (221; 313) adapted to receive the said bead, the said recess being open radially on the outside and being bounded, on the same side as the said base wall, directly by an outward extension of the base wall.

8. A cap according to Claim 7, characterised in that the recess (313) is bounded by a so-called sealing zone (311) which consists of a peripheral protrusion constituting a hard point during introduction of the cap on the casing, and which is extended by a terminal zone (312) of frusto-conical cross section which is adapted to obtain "all or nothing" closing.

9. A motor vehicle headlight having a casing according to one of Claims 1 to 6.
